# EUROPEAN PATENT APPLICATION

(11) **EP 4 428 139 A1**
(43) Date of publication of application: **11.09.2024**
(21) Application number: 23160687.2
(22) Date of filing: 08.03.2023
(51) Int. Cl.: C07F 9/38, C02F 5/14, C09K 23/00, C09K 23/14

(54) **POLYAMINOMETHYLENE PHOSPHONATE DERIVATIVES WITH LOW PHOSPHOROUS CONTENT HAVING SEQUESTERING AND DISPERSING PROPERTIES, RELATED USES AND PROCESSES FOR THE PREPARATION THEREOF**

(71) Applicant: Giovanni Bozzetto S.p.A., 24040 Filago (BG) (IT)
(72) Inventor: POZZI, Michele, 24040 Filago (BG) (IT); CIOLI, Fausto, 24040 Filago (BG) (IT); DONEGA', Stefano, 24040 Filago (BG) (IT)
(74) Representative: Bianchetti & Minoja with Trevisan & Cuonzo IPS SRL

(57) **Abstract**

The present invention relates to a new class of polyaminomethylene phosphonate derivatives with low phosphorous content and to processes for the preparation thereof. The compounds of the invention are useful for the preparation of additives that prevent the segregation of solids from water and aqueous solutions or dispersions acting as sequestering agents, precipitations inhibitors, dispersants and anti-scale agents in different industrial fields.

The compounds object of this invention are prepared by reacting diethylenetriamine with an epoxide, preferably ethylene oxide, followed by phosphonomethylation of the functionalized polyamines obtained in the previous step by reaction with an aqueous solution of phosphorous acid and formaldehyde in the presence of an acid. The reaction products are usually obtained as a mixture having different substitution degree and patterns.

The mixture can be used as chelating and sequestering agents, precipitations inhibitors, dispersants, boosters in laundry detergents and anti-scale agents; in admixture with other functional agents, carriers, vehicles, excipients suitable for the considered use and field of application.

## Description

The present invention relates to a new class of polyaminomethylene phosphonate derivatives (hereinafter also referred to as PAF) with low phosphorous content and to processes for the preparation thereof. The compounds of the invention are useful for the preparation of additives that prevent the segregation of solids from water and aqueous solutions or dispersions acting as sequestering agents, precipitations inhibitors, dispersants and anti-scale agents in different industrial fields.

The polyaminomethylene phosphonate derivatives (PAF) object of this invention and the additives containing them show high calcium tolerance and give excellent inhibition of the formation, deposition, incrustations and adherence of alkaline earth metal scale deposits, especially but not only calcium carbonate, also under severe conditions of pH, high dissolved solids content and high saturation level of salts, acting also in sub-stoichiometric concentrations (threshold effect).

The compounds of the invention imparts better sequestering and dispersing characteristic and overall performances than the commercially available phosphonates additives as sequestering agents, precipitations inhibitors, dispersants, and anti-scale agents in different industrial fields.

### BACKGROUND OF THE INVENTION

The use of phosphonates and their application as sequestering and or dispersing agents of alkaline earth metal salts is well known. The advantages of these chemicals are mainly linked to their efficacy and convenience, combined with the compatibility with a broad range of other chemicals, mainly polymeric acrylates, allowing to find tailor made solutions to several application fields involving aqueous systems, e.g., those found in detergency, home and industrial water treatment, concrete, reverse osmosis, and cosmetics. In more details, the main applications of phosphonates include:
- prevention of mineral deposits (for example, scale) in washing machines and dishwashers as well as on clothes and tableware subjected to washing treatment (US 3451939, EP 451434, WO 03080918);
- removal of the stains in bleach free detergents, increasing the stability of peroxide bleaches (WO 2009033973, US 5801137, WO 2018202383);
- increase the setting time of mortar and concrete (WO 1988001609, EP 166798);
- increase the life of the reverse osmosis filters (US 4806259, EP 644160);
- protection of fragrances and natural ingredients from oxidation (US 20080234173, EP 5732284).

EP 1 525 206 and US 7.659,315, in the Applicant's name, disclose polyaminophosphonate derivatives useful as inhibitors of precipitation and dispersants in aqueous systems, obtained by reacting triethylenetetramine with ethylene oxide followed by phosphonomethylation.

Beside the use of inorganic polyphosphate, many different chemicals have been developed that show some efficacy in the treatment of water solutions. Examples of said chemicals include polymers derived from acrylamide and acrylic acid (US patents 2,783,200; 3,514,476; 2,980,610; 3,285,886; 3,463,730; 3,518,204; 3,928, 196; 3,965,027; and 4,936,987), anionic polyelectrolytes such as polyacrylates, polymaleic anhydrides, copolymers of acrylates and sulfonates, polymers of sulfonated styrenes, phosphono modified acrylates (US patents 4,640,793; 4,650,591; 4,457,847; 4,671,888; WO 2000046328) as well as other phosphonates (US patents 4,973,744; 5,358,642; 6,846,419).

However, when used as threshold alkaline earth metal scale inhibitors, large dosages of these polymers are required, which in turn increases operating costs.

Furthermore, it is well known that it is necessary to reduce as much as possible the quantity of water used and the environmental impact of the treatment agents.

### DESCRIPTION OF THE INVENTION

It has now been found a new class of polyaminomethylene phosphonate derivatives structurally related to the triethylenetetramine derivatives disclosed in EP 1 525 206 and US 7.659,315, characterized by a lower phosphorus content and imparting improved sequestering and dispersing characteristics in comparison with the common commercial phosphonates.

The compounds of the invention have the following general formula 1 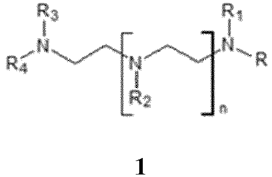 wherein:
n is 0 or 1, preferably 1;
R, R₁, R₂, R₃ and R₄, which may be the same or different, are selected from:
   - Hydrogen,
   - Hydroxy-(C2-C3) alkyl optionally substituted by a chlorine atom;
   - -CH₂PO₃M₂ wherein M is hydrogen or an alkali metal, ammonium or alkylammonium cation;
   - a group of formula CH₂CH₂X wherein X is selected from CONH₂, CHO, CN, COOR₅, COOM wherein R₅ is a methyl or ethyl group and M is as defined above;
   - a group of formula -CH₂CH₂(OCH₂CH₂)ₘOH wherein m is an integer from 1 to 5, preferably 2,
with the proviso that at least one of R and R₁-R₄ is a group of formula -CH₂PO₃M₂.

Hydroxy-(C2-C3) alkyl groups optionally substituted by chlorine are preferably selected from the following groups: CH₂CH₂OH; CH₂CHOHCH₃; CH₂CHOHCH₂Cl; CH₂CHOHCH₂OH. A particularly preferred group is hydroxyethyl (CH₂CH₂OH).

M is preferably the sodium cation.

R, R₁, R₂, R₃ and R₄ are preferably hydrogen, hydroxyethyl or -CH₂PO₃M₂, with the above stated proviso.

Preferably, one to three of the R, R₁-R₄ represent groups of formula -CH₂PO₃M_{2.}, the remaining groups being hydrogen or hydroxyethyl groups.

More preferably, one or two of the R, R₁-R₄ represent groups of formula -CH₂PO₃M₂, the remaining groups being hydrogen or hydroxyethyl groups.

When n is 1, said groups of formula -CH₂PO₃M₂ are preferably located on one or both lateral nitrogen atoms (groups R, R₁, R₃ and/or R₄).

Examples of preferred compounds of formula 1 are listed hereinafter:
1. R is -CH₂PO₃M₂, R₁ is hydrogen, R₂, R₃ and R₄ are hydroxyethyl.
2. R is -CH₂PO₃M₂, R₁, R₂, R₃ are hydroxyethyl and R₄ is hydrogen.
3. R₁, R₃ and R4 are hydroxyethyl and R and R₂ are -CH₂PO₃M₂.
4. R and R₁ are-CH₂PO₃M₂, and R₂, R₃ and R₄ are hydroxyethyl.
5. R₁ is hydrogen, R₂, R₃ are hydroxyethyl and R and R₄ are -CH₂PO₃M_{2.}
6. R is -CH₂PO₃M₂, R₁, R₃ and R₄ are hydroxyethyl and R₂ is hydrogen.
7. R₁ is hydrogen, R, R₃ and R₄ are hydroxyethyl and R₂ is CH₂PO₃M₂.

The compounds of formula 1 are prepared by a process comprising:
a) reacting ethylenediamine or diethylenetriamine with a compound selected from:
   - an epoxide of formula 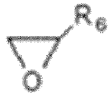 wherein R₆ is hydrogen, methyl, chloromethyl or hydroxymethyl;
   - a compound of formula 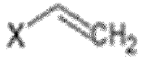 wherein X is as defined above;
   - a compound of formula 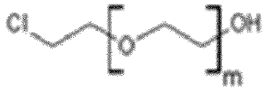 wherein m is an integer from 2 to 5;
b) phosphonomethylation of the functionalized polyamines obtained in step a) by reaction with an aqueous solution of phosphorous acid and formaldehyde in the presence of an acid, e.g. hydrochloric acid.

The compounds of formula 1 are usually obtained as a mixture of compounds having different substitution degree and patterns. The mixture can be used as an additive for the intended applications. Alternatively, the single compounds can be either selectively synthesized or isolated from the mixture, e.g. by adjusting the reaction stoichiometry and conditions. The compounds are obtained in liquid form, typically in form of an aqueous solution having a concentration of compounds of formula 1 of about 50% by weight. Said solution may be dried by conventional methods to give a product in powder or granular form.

Examples of applications in which the compounds of the invention may be advantageously used include reverse osmosis, scale prevention and scale removal, corrosion prevention and corrosion control, boiler protection and cleaning, cooling towers, gas scrubbers, bottle washing, hard surface, industrial and sanitary cleaners, domestic detergents, cooling system, textile auxiliaries and textile process, paints, laundry detergents, dishwashing tablets and detergents, metal finishing and metal cleaners, water treatment, geothermal, desalination and oil drilling processes, setting retardants for cement.

In the present disclosure, the term "sequestering agent" refers to a compound or chemical moiety having the capability to complex metal salts. The term "dispersing agent" refers to a compound or chemical moiety having the capability to keep metal salts in solutions avoiding their deposition on the surfaces. The term "threshold effect" refers to sequestering effect in sub stoichiometric concentrations. The term "calcium sensitivity" refers to reduced tolerance to calcium, at increasing pH and concentration of calcium, allowing the precipitation of poorly soluble calcium phosphonate salts. The term "booster effect" refers to the effect of a chemical or a mixture thereof that has a minimum impact on the primary cleaning of the wares but boost the cleaning performances by avoiding the redeposition of the stains of dirt on the surface of the wares. The same definitions can be found in EP 1 525 206 and US 7.659,315.

In the present disclosure, the term HEDP refers to 1-Hydroxyethylidene-1,1-diphosphonic acid, the term ATMP refers to aminotris(methylenephosphonic acid), the term DTPMP refers to (diethylenetriamine pentamethylene phosphonic acid), the term GLDA refers to L-glutamic acid, N,N-diacetic acid and the term EDTMP refers to ethylenediamine tetra(methylene phosphonic acid). The advantages of the phosphonates of the invention can be summarized as follows:
1. Reduced phosphorus content, in comparison to the compounds disclosed in EP 1 525 206 and US 7.659,315.
2. Threshold Effect, typical of the phosphonates, i.e., inhibition of precipitation from solutions supersaturated with CaCO₃ and/or CaSO₄ at sub-stoichiometric concentrations of the inhibitor.
3. Non-calcium sensitivity: increases in pH and concentration of calcium strongly affect the tolerance of the commercially available phosphonates (HEDP, ATMP, etc.) to calcium, increasing the possibility of precipitation of poorly soluble calcium phosphonate salts.
4. Booster effect in laundry detergents.
5. Improved dispersing effect than the traditional phosphonates, with a behavior similar to that of acrylic polymers, acting as dispersants and deflocculants, stabilizing colloidal systems which remain steadily dispersed for long periods.
6. Chelating effect comparable to that of the standard phosphonates.
7. Corrosion inhibition comparable to that of the standard phosphonates.
8. Hydrolytic stability similar to conventional phosphonates.
9. Broad affinity range towards several metals, helpful when used as single component sequestering/dispersing agent.

As shown in point 3) and 8) above, in addition to the threshold effect, the product of the invention shows high "dispersing ability". This property become evident when the sequestering power is determined by the traditional "HAMPSHIRE " method which does not allow to identify an endpoint during the titration with calcium acetate. This property suggests a potential application of the phosphonates of the invention as deflocculants, in a certain number of processes and applications where they are involved as stabilizers for different kind of dispersions like in the industrial and domestic detergent field for their ability to disperse dirt particles; as dispersing agents for water treatment plants, textile processing, geothermal waters, set retardants for concrete, cooling systems, in paints containing metallic pigments (ZnO), kaolin and drilling mud stabilizer. A further, particular advantage of this class of phosphonates consists in the absence of "Turbidity Zone", being therefore non-calcium sensitive at any concentration and temperature tested; they are also effective at high pH values (>10). This is very important since calcium tolerance of the traditional scale inhibitors like HEDP or ATMP quickly reduces with increasing the pH; in particular, this is important because water treatment processes are carried out at higher pH values than in the past. In fact, higher pH reduces the effects of corrosion, which is more marked at lower pH.

The invention, in a further embodiment, also provides formulations comprising as active ingredients the compounds of formula 1 or mixtures thereof, in admixture with other functional agents, carriers, vehicles, excipients suitable for the considered use and field of application.

The polyaminomethylene phosphonates of the invention may be used in liquid, solid or granular form in concentrations equal to or higher than 0.01% with respect to the total weight of the composition, preferably ranging from 0.05 to 10% by weight.

A preferred combination comprises the polyaminomethylene phosphonates of the invention with acrylic polymers and acrylic copolymers, providing a significant synergy in enhancing the dispersing, chelating and threshold effects.

The invention is illustrated in more detail in the following examples. Examples 1-5 refer to the preparation of intermediate functionalized polyamines, examples 7-10 refer to the preparation of the final compounds, examples 11 refers to the preparation of the compounds in solid or granular form, example 12 refers to formulation examples and examples 1B-4B refer to the performance tests as additives for different applications.

### EXAMPLE 1

495 to 510 of diethylenetriamine were heated at 95÷100°C into a suitable vessel. 210 to 220 g of ethylene oxide were then added stepwise at such rate that, with external cooling applied, the temperature did not exceed 110°C. The reaction mixture was then kept at 110°C long enough to ensure that no ethylene oxide was left unreacted and then cooled. The resulting product was diluted with water or a suitable solvent to ensure that the final viscosity at room temperature is low enough for the product to be easily pumpable.

### EXAMPLE 2

460 to 480 g of ethylenediamine were heated at 95÷100°C into a suitable vessel. 680 to 710 g of ethylene oxide were then added stepwise at such rate that, with external cooling applied, the temperature did not exceed 110°C. The reaction mixture was then kept at 110°C long enough to ensure that no ethylene oxide was left unreacted and then cooled. The resulting product may be diluted with water or a suitable solvent to ensure that the final viscosity at room temperature is low enough for the product to be easily pumpable.

### EXAMPLE 3

280 to 290 g of diethylenetriamine were heated at 95÷100°C into a suitable vessel. 360 to 375 g of ethylene oxide were then added stepwise at such rate that, with external cooling applied, the temperature did not exceed 110°C. The reaction mixture was then kept at 110°C long enough to ensure that no ethylene oxide was left unreacted and then cooled. The resulting product may be diluted with water or a suitable solvent to ensure that the final viscosity at room temperature is low enough for the product to be easily pumpable.

### EXAMPLE 4

890 to 930 g of diethylenetriamine were heated at 95÷100°C into a suitable vessel. 1000 to 1050 g of propylene oxide were then added stepwise at such rate that, with external cooling applied, the temperature did not exceed 110°C. The reaction mixture was then kept at 110°C long enough to ensure that no propylene oxide was left unreacted and then cooled. The resulting product may be diluted with water or a suitable solvent to ensure that the final viscosity at room temperature is low enough for the product to be easily pumpable.

### EXAMPLE 5

1110 to 1160 g of diethylenetriamine were heated at 95÷100°C into a suitable vessel. 1680 to 1740 g of ethylene oxide were then added stepwise at such rate that, with external cooling applied, the temperature did not exceed 110°C. The reaction mixture was then kept at 110°C long enough to ensure that no ethylene oxide was left unreacted and then cooled. The resulting product may be diluted with water or a suitable solvent to ensure that the final viscosity at room temperature is low enough for the product to be easily pumpable.

### EXAMPLE 6

A mixture of 700 to 730 g of diethylenetriamine and 410 to 425 g of ethylenediamine was heated at 95÷100°C into a suitable vessel. 800 to 835 g of ethylene oxide were then added stepwise at such rate that, with external cooling applied, the temperature did not exceed 110°C. The reaction mixture was then kept at 110°C long enough to ensure that no ethylene oxide was left unreacted and then cooled. The resulting product may be diluted with water or a suitable solvent to ensure that the final viscosity at room temperature is low enough for the product to be easily pumpable.

### EXAMPLE 7

565 to 590 g of compound of example 5 were added to a mixture of 390 to 405 g of a 70% phosphorous acid solution and 770 to 800 g of a 32% hydrochloric acid solution. The mixture thus obtained was heated to reflux, 110 to 115 g of paraformaldehyde were added over 1,5 hour and the reaction mixture was refluxed for 3 additional hours. 295 to 310 g of volatiles substances were removed from reaction mixture by distillation and dry matter was adjusted. The final product obtained was a viscous fluid having an active substance of 50% approx. Said final product may be neutralized to the desired pH value by means of known processes such as addition of alkali metal hydroxides, ammonia, or amines. IR analysis of the product showed the presence of methylenephosphonic amine groups, while IC analysis indicate that at least 90% phosphorous acid has reacted. The impurities include unreacted phosphorous acid, phosphoric acid, and other unidentified compounds.

### EXAMPLE 8

300 to 312 g of compound of example 3 were added to a mixture of 255 to 265 g of a 70% phosphorous acid solution and 335 to 350 g of a 32% hydrochloric acid solution. The mixture thus obtained was heated to reflux, 70 to 75 g of paraformaldehyde were added over 1 hour and the reaction mixture was refluxed for 2,5 additional hours. 240 to 250 g of volatiles substances were removed from reaction mixture by distillation and dry matter was adjusted. The final product obtained was a viscous fluid having an active substance of 50% approx. Said final product may be neutralized to the desired pH value by means of known processes such as addition of alkali metal hydroxides, ammonia, or amines. IR analysis of the product showed the presence of methylenephosphonic amine groups, while IC analysis indicate that at least 90% of the available amine groups had been phosphonomethylated. The impurities include unreacted phosphorous acid, phosphoric acid, and other unidentified compounds.

### EXAMPLE 9

320 to 335 g of compound of example 1 were added to a mixture of 1070 to 1120 g of a 70% phosphorous acid solution and 640 to 670 grams of a 32% hydrochloric acid solution. The mixture thus obtained was heated to reflux, 320 to 330 g of paraformaldehyde were added over 1,5 hour and the reaction mixture was refluxed for 3 additional hours. 650 to 680 g of volatiles substances were removed from reaction mixture by distillation and dry matter was adjusted. The final product obtained was a viscous fluid having an active substance of 50% approx. Said final product may be neutralized to the desired pH value by means of state-ofthe-art processes such as addition of alkali metal hydroxides, ammonia, or amines. IR analysis of the product showed the presence of methylenephosphonic amine groups, while IC analysis indicated that at least 90% of phosphorous acid has reacted. The impurities include unreacted phosphorous acid, phosphoric acid, and other unidentified compounds.

### EXAMPLE 10

305 to 315 g of compound of example 2 were added to a mixture of 475 to 495 g of a 70% phosphorous acid solution and 480 to 500 g of a 32% hydrochloric acid solution. The mixture thus obtained was heated to reflux, 270 to 280 g of a 45% formaldehyde solution were added over 1,5 hour and the reaction mixture was refluxed for 3 additional hours. 160 to 170 g of volatiles substances were removed from reaction mixture by distillation and dry matter was adjusted. The final product obtained was a viscous fluid having an active substance of 50% approx. Said final product may be neutralized to the desired pH value by means of known processes such as addition of alkali metal hydroxides, ammonia, or amines. IR analysis of the product showed the presence of methylenephosphonic amine groups, while IC analysis indicated that at least 90% of phosphorous acid has reacted . The impurities include unreacted phosphorous acid, phosphoric acid and other unidentified compounds.

### EXAMPLE 11

The polyaminomethylene phosphonates of the invention may be neutralized, mixed with a suitable filler if needed and treated to obtain powder or granules form.

Each of the product of examples 7 to 10 may be treated in such a way to obtain it in form of powder or granules by means of a drying process. The pH was adjusted to the desired value by means of known processes such as addition of alkali metal hydroxides, ammonia, or amines. Water and a suitable filler such as alkali metal or alkaline earth metal chlorides, sulphates or carbonates were then added to the desired dry matter content and the mixture was stirred until homogeneousness. The mixture was then streamed in a suitable drying apparatus and proper operating parameters were set, such as inlet liquid temperature, inlet pump flow, air suction flow, operating temperature, filter mesh, filter vibrating frequency, etc. The operating parameter were carefully set to grant a continuous output of free-flowing powder or granules of desired granulometry. The obtained solid product is readily soluble in water and maintains the required applicative performances of the liquid form.

### EXAMPLE 12 - Formulations

| **Industrial dishwashing detergent** | |
|---|---|
| **Ingredient** | **%** |
| NaOH | 5-10% |
| PAF (Example 8) | 5-10% |
| Water | To 100% |

| **Household dishwashing tablet** | |
|---|---|
| **Ingredient** | **%** |
| Citrates | 35-45% |
| Carbonates | 20-25% |
| Bleaching agent | 10-15% |
| silicates | 3-5% |
| Enzymes | 2-3% |
| Surfactants | 3-5% |
| PAF (Example 7) | 3-5% |
| Polyacrylates | 3-5% |
| Fragrances, fillers | 3-4% |

| **Laundry detergent** | |
|---|---|
| **Ingredient** | **%** |
| NaOH | 1-2% |
| Anionic surfactants | 13-15% |
| Non-ionic surfactants | 3-5% |
| PAF (Example 8) | 3-5% |
| Water | To 100% |

### PERFORMANCES EVALUATION

The compounds of the invention have been extensively characterized in terms of performances compared to known commercial phosphonates and Hydrodis WP 56 produced by Bozzetto Group. Testing a phosphonate derivative as such better highlights strengths and weaknesses of the product itself, avoiding possible interferences and flattening of results that can happen in testing fully formulated products. Specifically, the results highlighted that the lower amount of phosphorous characterizing the invention is not detrimental to the performances; on the contrary, the compounds of the invention impart better sequestering and dispersing characteristic than the commercially available phosphonates additives, as it will be apparent from the following examples.

### EXAMPLE 1B - CaCO₃ Threshold Effect at pH = 10, T= 40°C, 400 ppm of CaCO₃

The method describes the procedure for the determination of the Threshold Effect, that is the ability of a dispersing agent, present in sub-stoichiometric amounts, to inhibit the precipitation of solutions supersaturated with calcium carbonate in deionized water.

This method measures the efficiency of a dispersant by titration of the calcium ion remaining in a solution supersaturated with CaCO₃ respectively before and after treatment in an oven at 40°C for 24h. The greater the calcium concentration after the period in the oven, the greater the efficiency of the dispersant in preventing precipitation of CaCO₃.

Increasing sub stoichiometric amounts of phosphonate are dissolved in solutions containing [Ca⁺⁺] and [CO₃⁻] obtained by mixing proper CaCl₂ and Na₂CO₃ solutions.

This analysis allows to verify calcium sensitivity of the phosphonates, as above defined.

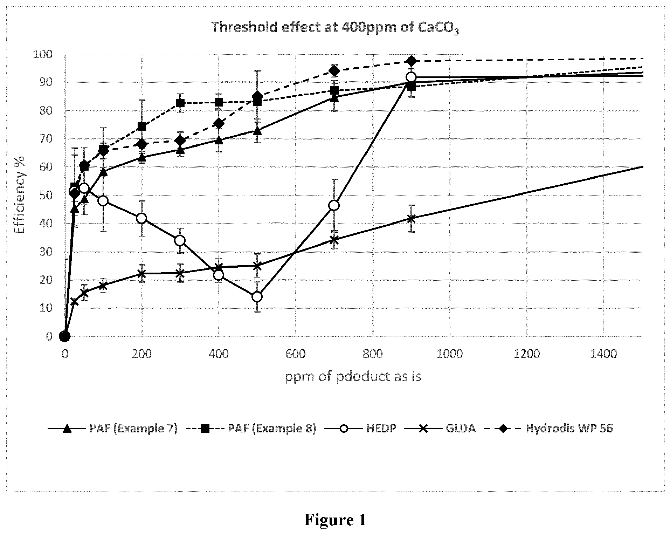

The precipitation of calcium carbonate is measured by titration of the filtered solution. The results obtained are summarized in **Table 1** and **Figure 1****.**

**Table 1**

| **Inhibitor concentration in test sol.** | **40 ppm** | **80 ppm** | **200 ppm** | **400 ppm** | **450 ppm** |
|---|---|---|---|---|---|
| Example 7 | 58 | 63 | 72 | 89 | 95 |
| Example 8 | 61 | 70 | 82 | 98 | 99 |
| HEDP | 52 | 48 | 21 | 77 | 88 |
| GLDA | 18 | 22 | 24 | 42 | 44 |
| | | | | | |
| Hydrodis WP 56 | 65 | 68 | 85 | 97 | 99 |

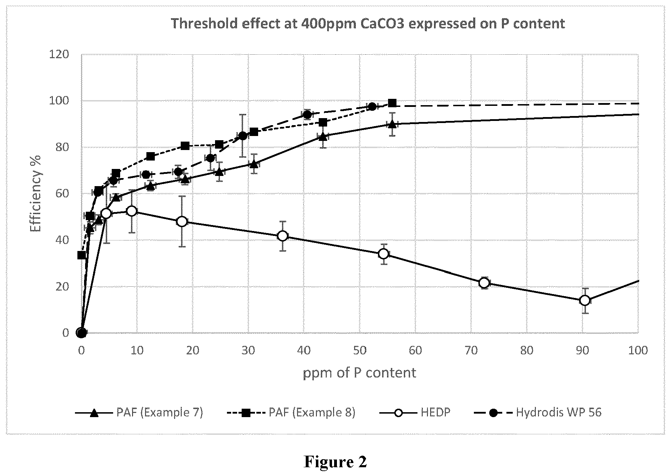

The results, expressed as the threshold effect on ppm of the phosphorus content of the inhibitor, provide clear evidence of the improved the efficacy of the inventive phosphonate in comparison to the prior art. The results are summarized in **Table 2** and **Figure 2****.**

**Table 2**

| **Phosphorus concentration in test sol.** | **5 ppm** | **10 ppm** | **25 ppm** | **50 ppm** | **55 ppm** |
|---|---|---|---|---|---|
| Example 7 | 58 | 63 | 70 | 85 | 90 |
| Example 8 | 61 | 70 | 82 | 98 | 99 |
| HEDP | 52 | 51 | 43 | 34 | 33 |
| Hydrodis WP 56 | 65 | 68 | 75 | 97 | 99 |

The results obtained highlight that HEDP does not exhibit threshold effect and it suffers from calcium sensitivity. On the other hand, both new and old generation Polyaminomethylene Phosphonate derivatives exhibit a good threshold effect and good calcium tolerance. Particularly, the polyaminomethylene phosphonates of the invention show a better or at least comparable threshold effect in comparison to previous generations of commercial phosphonates, notwithstanding the lower phosphorous content.

### EXAMPLE 2B - Booster effect in dishwashing detergents

The phosphonates according to the invention are applied in dishwashing formulations to verify their performance in this field. The phosphonates of the invention are tested versus standard dirt (1 - DM 01 Lasagne Bolognese / 2 - DM 14 Dark Tea / 3 - DM 51 Red wine / 4 - DM 31 Egg yolk with milk / 5 - DM 06 Fat cheese baked / 6 - DM 76 Corn starch / 7 - DM 91 Minced meat / 8 - DM 21 Egg yolk) supplied from Center For Test materials B.V.

The booster effect tests are performed using this formula, adding 30 g of the formulation prepared as reported in **Table 3** to a commercial dish washing machine, water hardness 27°F, washing volume 4 L for 2 h at 55°C:

**Table 3**

| **Chemical** | **A** | **B** | **C** | **D** | **E** | **P content in ppm** |
|---|---|---|---|---|---|---|
| NaOH 50% | 24 g | 24 g | 24 g | 24 g | 24 g | / |
| Example 7 | / | 8 g | / | / | / | 0.52 ppm |
| Example 8 | / | / | 8g | / | / | 0.33 ppm |
| HEDP | / | / | / | 8 g | / | 1.45 ppm |
| Hydrodis WP 56 | / | / | / | / | 8g | 0.56 ppm |
| Water | 76 g | 68 g | 68 g | 68 g | 68 g | / |

The wares treated with the above formulation are checked versus the non-treated ware and the evaluation is determined by spectrophotometric analysis. The results obtained are expressed as the average efficacy per each dirt, summarized in **Table 4.**

**Table 4**

| **Formulation label** | **Product** | **Avg. Efficacy** |
|---|---|---|
| A | Sodium Hydroxide 24% | 100 |
| B | Example 7 | 85 |
| C | Example 8 | 91 |
| D | HEDP | 75 |
| E | Hydrodis WP 56 | 85 |

The same effect needs to be evaluated as secondary washing on the wares verifying the number of spots present on the same. The results of the application can be expressed as follows:

**Table 5**

| **Result** | **N° spots** |
|---|---|
| **4** | 0-2 spots |
| **3** | 3-5 spots |
| **2** | 5-10 spots |
| **1** | Around 20% of surface covered of incrustation |
| **0** | At least half of the surface covered by incrustation |

According to **Table 5,** the performance of the chemicals tested as secondary washing can be summarized as shown in **Table 6:**

**Table 6**

| **Formulation label** | **Product** | **Result** |
|---|---|---|
| / | No chemical | 0 |
| B | Example 7 | 4 |
| C | Example 8 | 4 |
| D | HEDP | 4 |
| E | Hydrodis WP 56 | 4 |

### EXAMPLE 3B - Application in laundry formulations

The phosphonates of the invention are applied in laundry formulations to verify their performance in this field, evaluating in particular their ability to remove the dirt from the wares in normal household conditions. The phosphonates of the invention are tested versus standard dirt ( C-S-103 WINE IC-S-12 BLACK CURRANT JUICE /C-BC-03 TEA (Bleach Cloth) / C-BC-02 COFFEE / CN-11 STD Cotton, bleached without opt. Brightener / C-S-28 RICE STARCH / C-S-26 CORN STARCH / C-S-06 SALAD DRESSING / C-S-73 LOCUSTBEANGUM / C-S-54 OATMEAL COCOA / C-S-38 EGG YOLK WITH PIGMENT / CS-01 BLOOD / C-05 BLOOD MILK INK / C-S-08 GRASS EXTRACT / C-S-02 COCOA / C-10 BUTTERFAT WITH COLORANT / C-02 SOOT OLIVE OIL / C-S-32 SEBUM BAY WITH CARBON BLACK / C-S-17 FLUID MAKE UP / C-S-216 LIPSTICK) supplied from Center For Test materials B.V.

The experiments are performed using a household washing machine, with the following settings:
Cleansing solution 5g/L, Cleaning temperature 40°C, length of the program 110 min, centrifuge 800 rpm, final rinsing step. The overall consumption of water in the cycle is 14L of soft water. The cleansing solution has the formula reported below (table 7). Ratios are expressed on dry matter.

**Table 7**

| **Chemical** | **Grams** |
|---|---|
| Water | 58.8 g |
| Anionic Tensides (lauryl ether sulphate e.g.) | 6.0 g |
| Non ionic Tensides (isotridecyl alcohol EO e.g.) | 3.0 g |
| Defoamer (Fatty organic acids e.g.) | 0.2 g |
| PAF | 2.0 g |
| Total | 70 g |

The wares treated with the above formulation are checked versus the non-treated ware and the evaluation is determined by spectrophotometric analysis. The results obtained are expressed as the average efficacy per each dirt, summarized in **Table 8.**

**Table 8**

| **PRODUCT at 2.85%** | **EFFICIENCY** |
|---|---|
| DTPMP | **100** |
| Example 7 | 104 |
| Example 8 | 100 |
| Hydrodis WP 56 | 94 |

### EXAMPLE 4B - Setting retardant in concrete

The phosphonates of the invention are applied in concrete formulations to verify their performance in this field, evaluating their ability to increase the setting time of the concrete, that is the time required for the complete drying of the concrete. The setting time is measured using a tropicalized vicat recording apparatus, Vicatronic^{®}. The compounds of the invention are tested versus commercial phosphonates as additives in standard cement or mortar formulation reported in **Table 9.**

**Table 9**

| **Components** | **%** |
|---|---|
| Portland composite cement type II/A-LL 42,5R | 22.2 % |
| Normalized Sand ISO 679:2009 | 66.5 % |
| Water | 11.265% |
| Additive | 0.035% |

The cement or mortar prepared using this formula is then measured with a tropicalized vicat recording apparatus to verify the setting time. The instrument gives as result the initial setting time and the final setting time of the cement mixture expressed in minutes, where longer setting time are preferable for application where the concrete needs to be kept fluid for longer time like in concrete mixer trucks **(Table 10).**

**Table 10**

| **Additive** | **Initial setting time (min)** | **Final setting time (min)** |
|---|---|---|
| None | 180 | 300 |
| Example 7 | 420 | 520 |
| Example 8 | 420 | 540 |
| Hydrodis WP 56 | 400 | 510 |
| EDTMP | 330 | 450 |

## Claims

1. Compounds of general formula 1 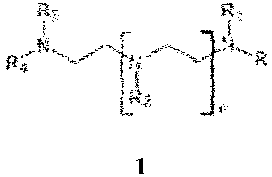 wherein:
n is 0 or 1, preferably 1;
R, R₁, R₂, R₃ and R₄, which may be the same or different, are selected from:
- Hydrogen,
- Hydroxy-(C2-C3) alkyl optionally substituted by a chlorine atom;
- -CH₂PO₃M₂ wherein M is hydrogen or an alkali metal, ammonium or alkylammonium cation;
- a group of formula CH₂CH₂X wherein X is selected from CONH₂, CHO, CN, COOR₅, COOM wherein R₅ is a methyl or ethyl group and M is as defined above;
- a group of formula -CH₂CH₂(OCH₂CH₂)ₘOH wherein m is an integer from 1 to 5, preferably 2,
with the proviso that at least one of R and R₁-R₄ is a group of formula -CH₂PO₃M_{2.}

2. Compounds according to claim 1 wherein hydroxy-(C2-C3) alkyl groups optionally substituted by chlorine are selected from CH₂CH₂OH; CH₂CHOHCH₃; CH₂CHOHCH₂Cl; CH₂CHOHCH₂OH.

3. Compounds according to claim 2 wherein hydroxy-(C2-C3) alkyl is CH₂CH₂OH.

4. A compound according to any one of claims 1-3 wherein R, R₁, R₂, R₃ and R₄ are hydrogen, hydroxyethyl or -CH₂PO₃M₂.

5. A compound according to any one of claims 1-4 wherein one to three of the R, R₁-R₄ represent groups of formula -CH₂PO₃M₂, the remaining groups being hydrogen or hydroxyethyl groups.

6. A compound according to any one of claims 1-5 wherein one or two of the R, R1-R4 represent groups of formula -CH₂PO₃M₂, the remaining groups being hydrogen or hydroxyethyl groups.

7. A compound according to any one of claims 1-6 wherein:
R is -CH₂PO₃M₂, R₁ is hydrogen, R₂, R₃ and R₄ are hydroxyethyl.
R is -CH₂PO₃M₂, R₁, R₂, R₃ are hydroxyethyl and R₄ is hydrogen.
R₁, R₃ and R4 are hydroxyethyl and R and R₂ are -CH₂PO₃M_{2.}
R and R₁ are-CH₂PO₃M₂, and R₂, R₃ and R₄ are hydroxyethyl.
R₁ is hydrogen, R₂, R₃ are hydroxyethyl and R and R₄ are -CH₂PO₃M_{2.}
R is -CH₂PO₃M₂, R₁, R₃ and R₄ are hydroxyethyl and R₂ is hydrogen.
R₁ is hydrogen, R, R₃ and R₄ are hydroxyethyl and R₂ is CH₂PO₃M₂.

8. A process for the preparation of the compounds of formula 1 comprising:
a) reacting ethylenediamine or diethylenetriamine with a compound selected from:
- an epoxide of formula 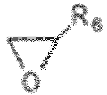 wherein R₆ is hydrogen, methyl, chloromethyl or hydroxymethyl;
- a compound of formula 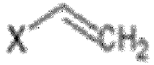 wherein X is as defined above;
- a compound of formula 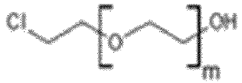 wherein m is an integer from 2 to 5;
b) phosphonomethylation of the functionalized polyamines obtained in step a) by reaction with an aqueous solution of phosphorous acid and formaldehyde in the presence of an acid.

9. A product obtainable by the process of claim 8.

10. Use of the compounds of claims 1-7 and 9 as chelating and sequestering agents, precipitations inhibitors, dispersants, boosters in laundry detergents and anti-scale agents.

11. Formulations comprising as active ingredients the compounds of formula 1 or mixtures thereof, in admixture with other functional agents, carriers, vehicles, excipients suitable for the considered use and field of application.
